# EUROPÄISCHE PATENTSCHRIFT

(11) **EP 1 286 826 B1**
(45) Veröffentlichungstag und Bekanntmachung des Hinweises auf die Patenterteilung: **17.03.2004**
(21) Anmeldenummer: 01953966.7
(22) Anmeldetag: 30.05.2001
(51) Int. Cl.: B29D 28/00, B29C 55/18

(54) **KUNSTSTOFFNETZ AUS KUNSTSTOFFSTRECKFOLIE SOWIE VORRICHTUNG UND VERFAHREN ZU SEINER HERSTELLUNG**
PLASTIC NET FROM PLASTIC STRETCH FILM AND DEVICE AND METHOD FOR PRODUCING THE SAME
FILET EN MATIERE PLASTIQUE CONSTITUE D'UN FILM ETIRABLE EN MATIERE PLASTIQUE, ET DISPOSITIF ET PROCEDE DE FABRICATION D'UN TEL FILET

(30) Priorität: 02.06.2000 DE 10027527
(43) Veröffentlichungstag der Anmeldung: 05.03.2003
(73) Patentinhaber: Mega Plast S.A., Heraklion 71001 (GR)
(72) Erfinder: KAVVADIAS, Harilaos, GR - Heraklion 71305 (GR); KONTOJIANNIS, Michail, GR - Heraklion 71303 (GR)
(74) Vertreter: Müller - Hoffmann & Partner
(86) Internationale Anmeldenummer: PCT/EP2001/006164
(87) Internationale Veröffentlichungsnummer: WO 2001/091997

(56) Entgegenhaltungen:
- EP-A- 0 820 856
- US-A- 4 087 226
- US-A- 4 374 798
- US-A- 4 389 315

## Beschreibung

Die Erfindung betrifft ein Kunststoffnetz aus einer Kunststoffstreckfolie sowie zu deren Herstellung geeignete Vorrichtungen und Verfahren.

Zum Verpacken von Paletten, Strohballen, Früchten etc. ist es bekannt, gelochte, vorgestreckte Kunststoffstreckfolien zu verwenden, um eine ausreichende Dehnbarkeit sowie eine Belüftung der zu verpackenden Gegenstände zu ermöglichen. Aus der EP 820 856 A1 ist eine vorgestreckte Kunststoffstreckfolie bekannt, bei der Löcher durch ein thermisches Bestrahlungsverfahren ohne Berühren der Folie und damit ohne Folienabfall, z. B. durch Ausstanzen, erzeugt werden.

Für andere Verpackungszwecke haben sich Netze als geeigneter erwiesen, die üblicherweise aus einzelnen Fäden oder schmalen Bändern geflochten oder verknotet werden. Die Netze haben nur eine begrenzte Dehnbarkeit, was ihre Eignung als Verpackungsmaterial einschränkt. Außerdem ist ihre Herstellung aufwendig.

Aus der WO 91/18735 A1 ist die Verwendung von LLDPE-Polyethylen bekannt.

Das Dokument US-A-4374798 offenbart ein Kunststoffnetz gemäß dem Oberbegriff des Anspruchs 1.

Das Dokument US-A-4087226 offenbart eine Vorrichtung gemäß dem Oberbegriff des Anspruchs 5.

Der Erfindung liegt die Aufgabe zugrunde, ein in der Herstellung vereinfachtes Kunststoffnetz sowie ein Verfahren zu dessen Herstellung und dafür geeignete Vorrichtungen anzugeben.

Erfindungsgemäß wird die Aufgabe durch ein Kunststoffnetz gemäß Patentanspruch 1 gelöst. Vorrichtungen zu seiner Herstellung sind in den unabhängigen Ansprüchen 5 und 7 definiert. Ein Verfahren zum Herstellen des Kunststoffnetzes ergibt sich aus Anspruch 12 Vorteilhafte Weiterentwicklungen der Erfindung sind in den abhängigen Ansprüchen definiert.

Ein erfindungsgemäßes, nur aus einer vorgestreckten Kunststoffstreckfolie aus z. B. LLDPE-Polyethylen bestehendes Kunststoffnetz weist eine Vielzahl von in Spalten und Reihen angeordneten Löchern auf, wobei zwischen jeweils zwei Löchern ein Steg ausgebildet ist, der zwei sich in einer Hauptrichtung erstreckende Fäden verbindet und im Vergleich zu den restlichen Bereichen der Kunststoffstreckfolie zusätzlich vorgestreckt ist.

Die aus Teilbereichen der Kunststoffstreckfolie bestehenden Fäden sind quer zur Hauptrichtung quergefaltet, also gestaucht. Dadurch ergibt sich ein sehr großporiges Netz, das sich aufgrund der besonderen Haft- und Dehnungseigenschaften der Kunststoffstreckfolie in Verbindung mit dem geometrischen Aufbau hervorragend als Verpakkungs- oder Wickelmaterial eignet.

Bei dem erfindungsgemäßen Verfahren zum Herstellen des Kunststoffnetzes wird zunächst eine Folienbahn aus einer vorgestreckten Kunststoffstreckfolie durch lokale Einwirkung von Wärme an jedem Loch mit Löchern versehen. Die dadurch entstehenden Stege, die sich quer zur Hauptrichtung der Kunststoffstreckfolie erstrecken, werden in einer dafür geeigneten Vorrichtung vorgestreckt, um die Breite der Folie und damit ihren Ausnutzungsgrad zu vergrößern. Anschließend werden die sich in der Hauptrichtung erstreckenden Fäden in einer weiteren Vorrichtung quergefaltet, um die erforderliche Festigkeit pro Breiteneinheit des Kunststoffnetzes zu erreichen.

Eine Vorrichtung zum Vorstrecken der Stege weist zwei Walzen auf, wobei auf einer ersten Walze angebrachte Stahlscheiben in in einer zweiten Walze vorhandene Ausnehmungen eingreift. Da sich die Walzen berühren und mit einem Material mit hohem Reibungskoeffizienten beschichtet sind, kann die Kunststofffolie bei einem Durchlaufen der Vorrichtung an den jeweiligen Fäden festgehalten werden, während die Stege durch die Stahlscheiben gedehnt und somit vorgestreckt werden.

Eine erfindungsgemäße Vorrichtung zum Querfalten der Fäden weist zwei Walzenpaare auf, zwischen denen ein Umformbereich vorgesehen ist, gegen den die Kunststoffstreckfolie gespannt wird. Der Umformbereich weist in einem ersten Abschnitt Führungsschienen auf, über die die Stege des Kunststoffnetzes gleitend bewegt werden können, während die Fäden in den Zwischenräumen zwischen den Führungsschienen auf einer Führungsplatte gleiten. In einem zweiten Abschnitt gehen die Führungsschienen in Formrippen über, die sich zunehmend verbreitern, während ihre Höhe über der Führungsplatte abnimmt. Dadurch werden die zwischen den Formrippen verlaufenden seitlich Fäden gekräuselt bzw. quergefaltet. Eine Querstauchung der Fäden findet allerdings nicht statt. Vielmehr wird das Folienmaterial eines einzelnen Faden gezwungen, sich in mehreren Lagen übereinander zu legen, wodurch die Querfaltungen entstehen. Ein dünner, halbfester Faden mit guter Längsdehnbarkeit ist. die Folge.

Diese und weitere Merkmale und Vorteile der Erfindung werden nachfolgend anhand eines Beispiels unter Zuhilfenahme der begleitenden Figuren näher erläutert. Es zeigen:
- **Fig. 1**: in schematischer Seitenansicht die gesamte Anlage zur Herstellung des erfindungsgemäßen Kunststoffnetzes;
- **Fig. 2**: eine Draufsicht auf einen Ausschnitt der Kunststoffstreckfolie nach Erzeugung der Löcher;
- **Fig. 3**: eine Ansicht der erfindungsgemäßen Vorrichtung zum Vorstrecken der Stege;
- **Fig. 4**: eine Draufsicht auf die Kunststoffstreckfolie nach dem Vorstrecken der Stege;
- **Fig. 5**: eine Draufsicht auf einen Umformbereich der erfindungsgemäßen Vorrichtung zum Querfalten der Fäden;
- **Fig. 6**: eine schematische räumliche Ansicht des Umformbereichs von Fig. 5;
- **Fig. 7**: einen Schnitt durch den Umformbereich;
- **Fig. 8**: eine vergrößerte Darstellung von zwei zu dem Umformbereich gehörenden Formrippen;
- **Fig. 9**: eine Draufsicht auf einen Ausschnitt des fertiggestellten Kunststoffnetzes.

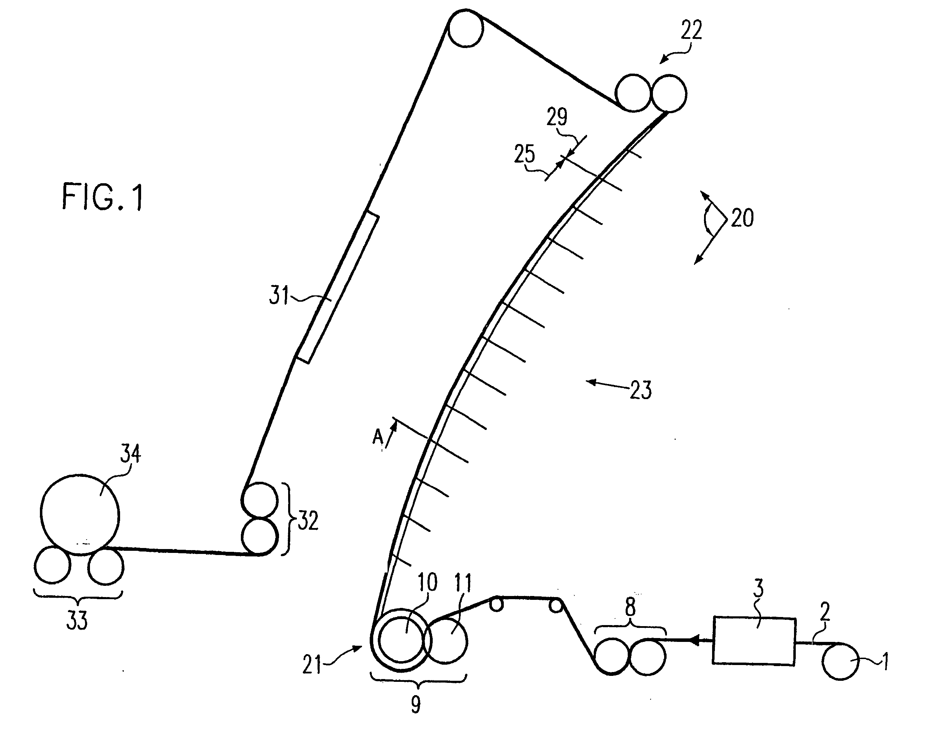

Fig. 1 zeigt in einer schematischen Seitenansicht die gesamte Anlage zum Herstellen eines erfindungsgemäßen Kunststoffnetzes.

Von einer Vorratsrolle 1 wird kontinuierlich eine breitbandige, vorgestreckte Kunststoffstreckfolie 2 aus LLDPE-Polyethylen (Low Density oder Very Low Density) abgezogen.

In einer Lochvorrichtung 3 werden in der Kunststoffstreckfolie 2 mittels eines bekannten Verfahrens Löcher erzeugt. Dies ist grundsätzlich durch mechanisches Lochen der Kunststoffstreckfolie 2 möglich. Als besser geignet hat sich jedoch ein thermisches Lochverfahren erwiesen, bei dem eine Platte mit einer Vielzahl von auf wenigstens 500 °C erhitzten Spitzen auf die Folie aufgebracht wird. Sobald die Spitzen die Kunststoffstreckfolie 2 berühren, öffnen sich an den betreffenden Stellen Löcher in der Folie, an deren Umfang sich jeweils ein Wulst ausbildet, dessen Dicke größer ist als die Dicke der restlichen Kunststoffstreckfolie 2. Die dadurch entstandene Materialansammlung an jedem der Löcher ermöglicht es, die Kunststoffstreckfolie 2 in den nachfolgenden Arbeitsschritten zusätzlich zu dehnen, ohne dass das Material einreißt.

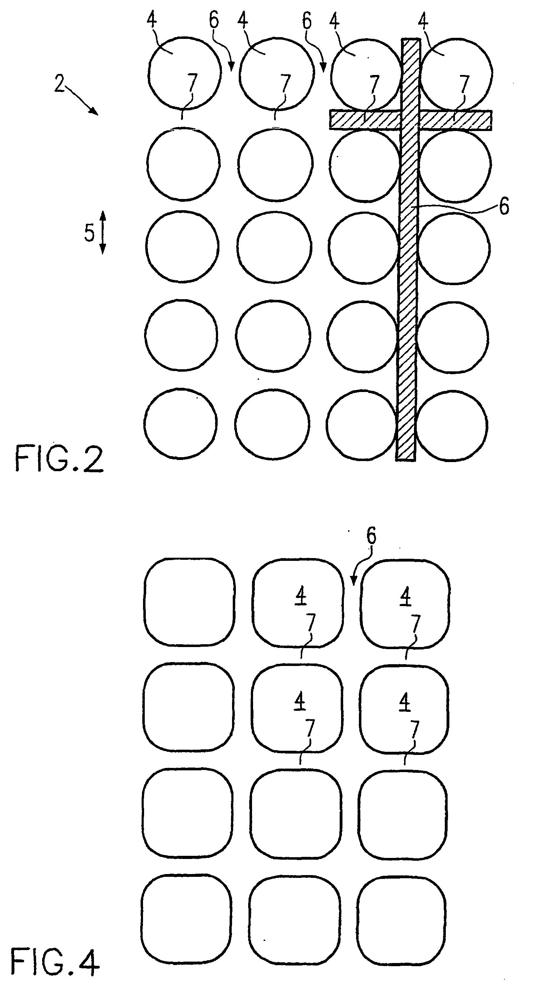

Fig. 2 zeigt eine Draufsicht auf einen Ausschnitt der Kunststoffstreckfolie 2 nach Verlassen der Lochvorrichtung 3.

Danach sind Löcher 4 in sich in einer Hauptrichtung 5 erstreckenden Spalten sowie quer dazu verlaufenden Reihen angeordnet. Für das eigentliche Material der Kunststoffstreckfolie 2 wird definiert, dass die sich in der Hauptrichtung 5 erstreckenden Materialbahnen als Fäden 6 anzusehen sind, während die quer zur Hauptrichtung 5 verlaufenden und die Fäden 6 verbindenden Materialteile als Stege 7 bezeichnet werden. Wie aus Fig. 2 erkennbar ist, ist der Übergang zwischen Fäden 6 und Stegen 7 fließend. Zur Verdeutlichung des Begriffs "Faden" ist eine schraffierte Fläche eingezeichnet, an die zwei ebenfalls durch schraffierte Flächen gekennzeichnete Stege 7 angrenzen.

Die Definition von Fäden 6 und Stegen 7 als Teilbereiche der Kunststoffstreckfolie 2 dient unter anderem auch der nachfolgenden Erläuterung der Erfindung.

Die Kunststoffstreckfolie 2 wird nach Verlassen der Lochvorrichtung 3 durch eine an sich bekannte, aus einem Walzenpaar bestehende Längsstreckeinrichtung 8 geführt.

Danach erreicht sie eine erfindungsgemäße Vorrichtung zum Vorstrecken der Stege 7 (nachfolgend Vorstreckvorrichtung 9 genannt).

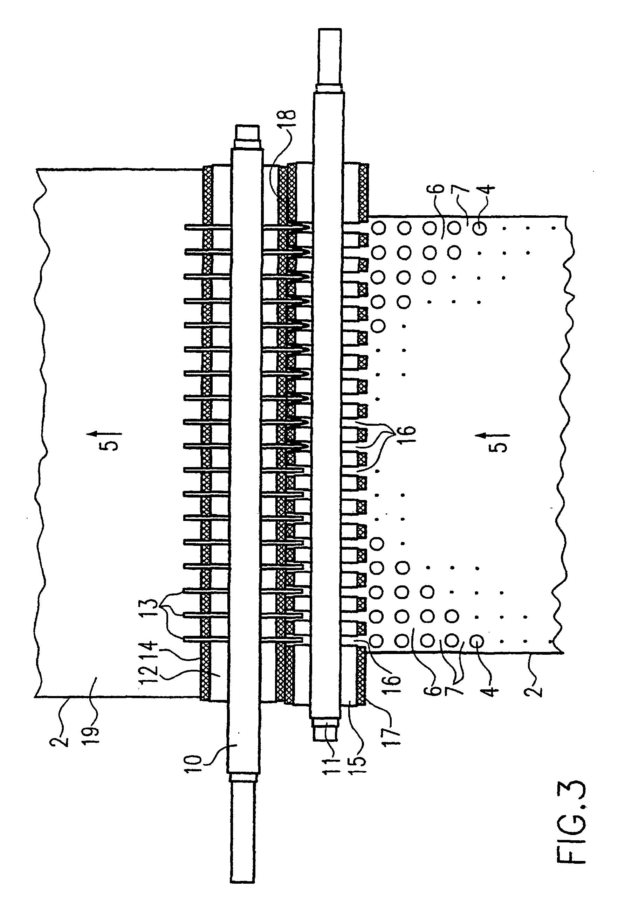

Die in Fig. 3 in einer Draufsicht gezeigte Vorstreckvorrichtung 9 weist eine erste Walze 10 und eine zweite Walze 11 auf.

Auf der ersten Walze 10 sind Walzkörper 12 sowie Stahlscheiben 13 aufgesetzt. Die Walzkörper 12 und Stahlscheiben 13 können einstückig miteinander verbunden sein oder als Einzelelemente auf die erste Walze 10 aufgeschoben werden.

Die Anzahl der Stahlscheiben 13 entspricht der Anzahl von Löchern 4 in einer Querreihe der Kunststoffstreckfolie 2. Der Abstand der Stahlscheiben 13 entspricht somit exakt dem jeweiligen Abstand der Löcher 4 in Querrichtung.

Die Walzkörper 12 sind an ihrer radialen Außenseite mit Gummi beschichtet.

Die zweite Walze 11 weist ebenfalls Walzkörper 15 auf, die entweder als Einzel-elemente auf der zweiten Walze 11 oder als ein Stück befestigt sind. Die Walzkörper 15 bilden Ausnehmungen 16, deren Anzahl der Anzahl der Stahlscheiben 13 entspricht.

Auch die radialen Umfangsflächen der Walzkörper 15 sind durch Gummischichten 17 abgedeckt.

Wie aus Fig. 3 erkennbar ist, sind die erste Walze 10 und die zweite Walze 11 derart zueinander angeordnet, dass ihre Gummischichten 14, 17 und somit ihre Walzkörper 12, 15 einander berühren und gegeneinander abwälzen können. Dadurch greifen die Stahlscheiben 13 in die zugehörigen Ausnehmungen 16 ein.

Fig. 3 zeigt auch schematisch die Bahn der herangeführten Kunststoffstreckfolie 2 in der Draufsicht, wie dies auch aus Fig. 1 hervorgeht. Die Kunststoffstreckfolie 2 wird derart zwischen der ersten Walze 10 und der zweiten Walze 11 hindurchgeführt, dass die Fäden 6 jeweils von den Gummischichten 14, 17 gehalten werden, während die Löcher 4 und die dazwischen befindlichen Stege 7 zunächst über den Ausnehmungen 16 zu liegen kommen. Mit weiterer Drehung der Walzen 10, 11 gelangen die Löcher 4 und Stege 7 in den Wirkungsbereich der Stahlscheiben 13 und werden tief in die Ausnehmungen 16 hineingedrückt, wie dies durch die verformte Kunststoffstreckfolie 18 in Fig. 3 dargestellt wird.

Dadurch werden die Stege 7 gestreckt, wodurch sich die Breite des gesamten Bandes der Kunststoffstreckfolie 2 deutlich vergrößert. Z. B. ist es möglich, aus einem ursprünglich 50 cm breiten Band ein 80 cm breites Band herzustellen. Die Wirkung der Verbreiterung wird in Fig. 3 schematisch durch das breitere Band 19 der Kunststoffstreckfolie 2 dargestellt.

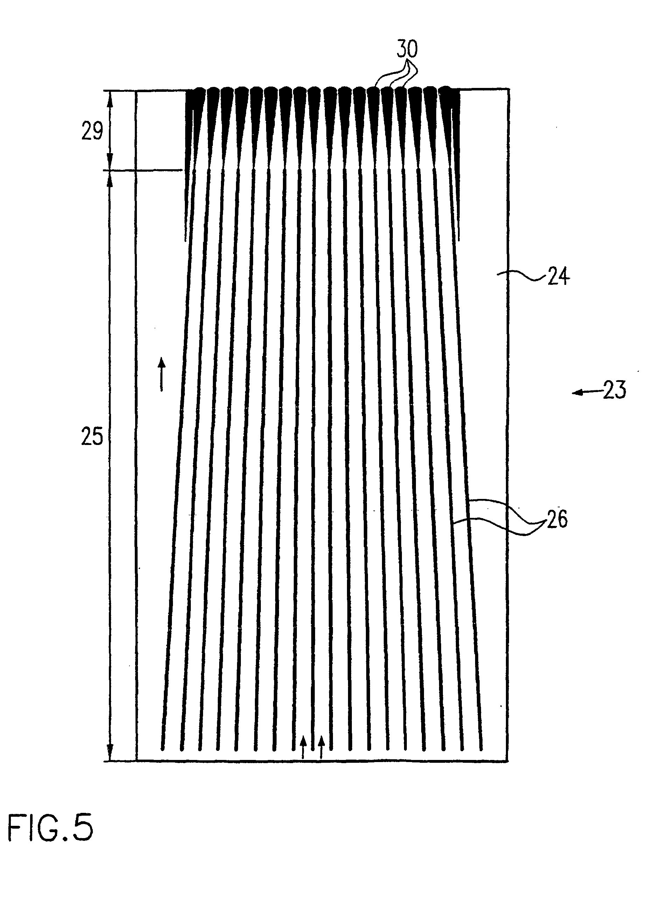

Nachdem die Kunststoffstreckfolie 2 in der Längsstreckeinrichtung 8 und der Vorstreckeinrichtung 9 in Längs- und Querrichtung gedehnt worden ist, hat sich die Form der Löcher 4 bzw. Fäden 6 und Stege 7 geändert, wie in Fig. 4 in der Draufsicht der Kunststoffstreckfolie 2 dargestellt.

Unmittelbar nach Verlassen der Vorstreckvorrichtung 9 gelangt die Kunststoffstreckfolie 2 in eine erfindungsgemäße Vorrichtung zum Querfalten der Fäden 6 (nachfolgend Querfaltvorrichtung 20 genannt).

Alternativ dazu kann die bereits einem Netz entsprechende Kunststoffstreckfolie 2 auch als fertiges Endprodukt verwendet werden. In diesem Fall wird die Kunststoffstreckfolie 2 nach Verlassen der Vorstreckvorrichtung 9 direkt über Transport- und Streckwalzen sowie eine später beschriebene Heizeinrichtung 31 zum Aufwickeln auf eine Rolle geführt, ohne dass die Fäden 6 quergefaltet werden. Dieses als Endprodukt geeignete "Zwischenprodukt" weist bereits gute Eigenschaften als Kunststoffnetz auf. Gegenüber dem eigentlichen Endprodukt nach Durchlauf des gesamten Verfahrens hat es den Vorteil einer größeren Folien-Breite von beispielsweise 75-80 cm.

Die Querfaltvorrichtung 20 besteht aus einem ersten Walzenpaar 21, einem zweiten Walzenpaar 22 und einem dazwischen angeordneten Umformbereich 23.

Das erste Walzenpaar 21 wird in der in Fig. 1 gezeigten Ausführungsform der Erfindung durch die Vorstreckvorrichtung 9 gebildet. Da jedoch die Querfaltvorrichtung 20 auch ohne die Vorstreckvorrichtung 9 arbeiten kann, sind die besonderen Wirkungen der Vorstreckvorrichtung 9 nicht zwingend erforderlich. Anstelle der Vorstreckvorrichtung 9 kann für die Querfaltvorrichtung 20 ein übliches Walzenpaar eingesetzt werden.

Das erste und das zweite Walzenpaar 21, 22 sind in der Lage, die Kunststoffstreckfolie 2 zu spannen - gegebenenfalls auch zu verstrecken - und gegen den in der Hauptrichtung 5, d. h. Bewegungsrichtung der Kunststoffstreckfolie 2 gekrümmten Umformbereich 23 anzudrücken.

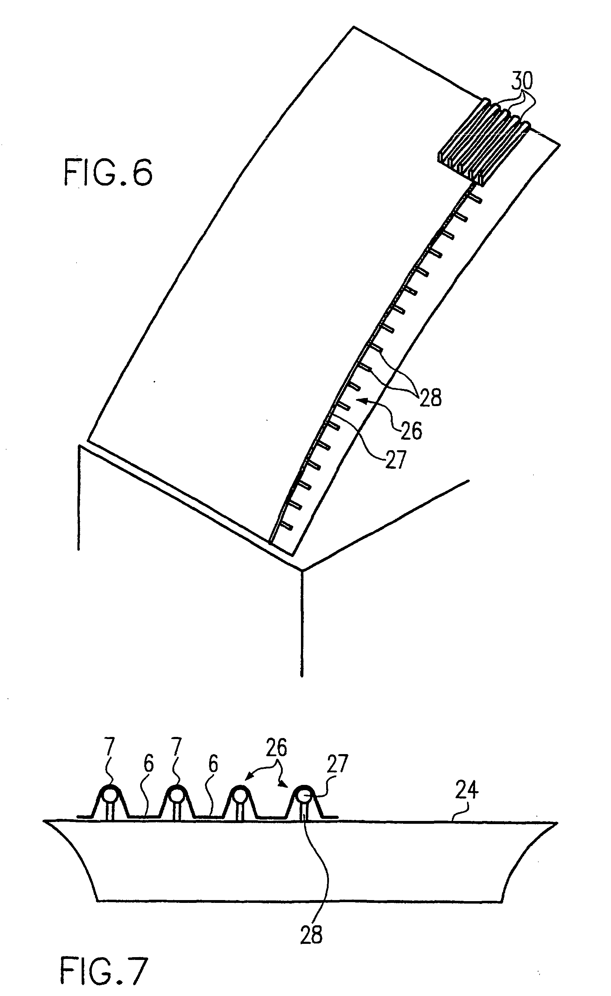

Der Umformbereich 23 wird anhand der Fig. 1 und Fig. 5 bis 8 näher erläutert, wobei Fig. 1 den Umformbereich 23 in Seitenansicht, Fig. 5 den Umformbereich 23 in einer Draufsicht (in Fig. 1 von links gesehen) und Fig. 6 den Umformbereich 23 in räumlicher Ansicht zeigt.

Der Umformbereich 23 weist eine gekrümmte Führungsplatte 24 auf, über die die Kunststoffstreckfolie 2 geführt wird.

Auf der Führungsplatte 24, die z. B. durch ein gekrümmtes Blech gebildet werden kann, ist in einem ersten Abschnitt 25 eine der Anzahl von Stegen 7 in Querrichtung entsprechende Anzahl von Führungsschienen 26 angebracht. Im Verlauf des ersten Abschnitts 25 nimmt der Abstand der Führungsschienen 26 ab, wie aus Fig. 5 erkennbar ist.

Fig. 7 zeigt einen schematischen Schnitt durch den Umformbereich 23 in Richtung des Pfeils A in Fig. 1. Danach wird jede der Führungsschienen 26 durch ein langgestrecktes Röhrchen 27 gebildet, das mit Stützen 28 auf der Führungsplatte 24 gehalten ist.

In einem sich an den ersten Abschnitt 25 anschließenden zweiten Abschnitt 29 gehen die Führungsschienen 26 in Formrippen 30 über.

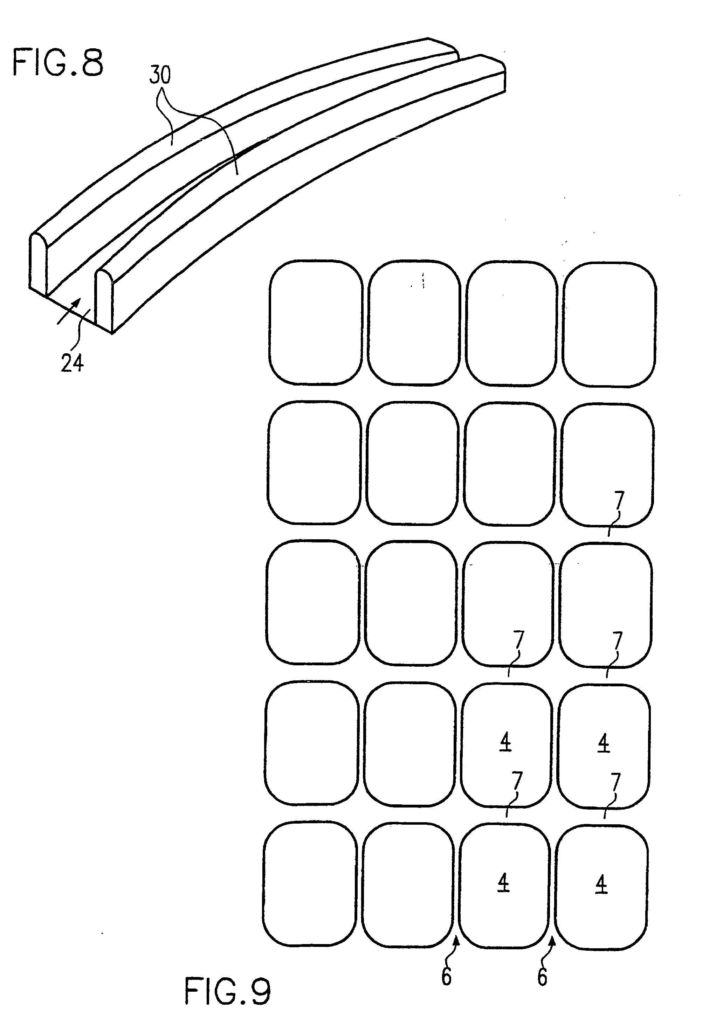

Die Formrippen 30 sind in Fig. 8 vergrößert dargestellt. Jede der Formrippen 30 weist in einem nahe dem ersten Abschnitt 25 gelegenen Anfangsbereich eine Höhe bezüglich der Führungsplatte 24 auf, die größer als die Breite der Formrippe 30 ist. Im weiteren Verlauf des zweiten Abschnitts 29 bzw. der Formrippe 30 nimmt ihre Höhe ab, während die Breite zunimmt, bis schließlich am Ende des zweiten Abschnitts 29, in der Nähe des zweiten Walzenpaars 22, die Höhe der Formrippe 30 kleiner als ihre Breite ist. Dementsprechend verringert sich der Zwischenraum zwischen den Formrippen 30, wie aus den Fig. 5 und 8 erkennbar.

Je nach Anforderung können die keilförmigen Formrippen 30 aus einem Rohr- oder Vollmaterial hergestellt und dann auf der Führungsplatte 24 befestigt werden.

Nachfolgend wird die Funktion der Querfaltvorrichtung 20 erläutert.

Wie bereits ausgeführt, wird die Kunststoffstreckfolie 2 gegen die Führungsplatte 24 mittels der Walzenpaare 21, 22 straff angehalten. Dabei verläuft die Kunststoffstreckfolie 2 über die Führungsschienen 26 derart, dass sich die Fäden 6 in den Zwischenräumen zwischen den Führungsschienen 26, also in Kontakt mit der Führungsplatte 24 befinden, während sich die Stege 7 über die Führungsschienen 26 wölben, wie dies auch aus Fig. 7 erkennbar ist.

Da sich die Führungsschienen 26 in ihrem Verlauf immer mehr annähern, werden die Fäden 6 zusammengeschoben, was schließlich zu in Längsrichtung (Hauptrichtung 5) verlaufenden Falten führt. Aufgrund der seitlichen Faltwirkung wird von einer Querfaltung gesprochen.

Die Auffaltwirkung wird nach Verlassen der Führungsschiene 26 durch die Formrippen 30 noch mehr verstärkt. Die Stege 7 der Kunststoffstreckfolie 2 werden über die jeweiligen Rücken der Formrippen 30 geführt, während die sich in den Zwischenräumen der Formrippen befindenden Fäden 6 immer stärker zusammengefaltet werden. Als Beispiel sei genannt, dass ein Faden 6 beim Eintreten in den zweiten Abschnitt 29, also zu Beginn der Formrippe 30, eine Breite von etwa 16 mm einnimmt, während er beim Austritt aus dem zweiten Abschnitt, kurz vor dem zweiten Walzenpaar 22, nur noch eine Breite von 2 mm aufweist. Die gute Haftwirkung des Materials der Kunststoffstreckfolie 2 sorgt dafür, dass sich der Faden 6 leicht zusammenknäulen lässt.

Das zweite Walzenpaar 22 dient außer zum Straffhalten und Dehnen der Kunststoffstreckfolie 2 auch als Quetschwalze, um die zusammengefalteten Fäden 6 zu stabilisieren.

Nach Verlassen des zweiten Walzenpaares 22 wird das inzwischen aus der Kunststoffstreckfolie 2 entstandene Kunststoffnetz über eine Heizeinrichtung 31 (ca. 80°C) zum Ausgleich von Spannungen und zum Normalisieren bzw. Stabilisieren geführt und anschließend in einer durch zwei Walzen gebildeten Streckeinrichtung 32 nochmals gedehnt, bevor es in einer Wickeleinrichtung 33 zu einer Rolle 34 aufgewickelt wird.

Am Ende des Verfahrens weist das Kunststoffnetz die in Fig. 9 gezeigte Struktur auf, nämlich mit gedehnten Stegen 7 und zusammengefalteten Fäden 6. Die Fäden 6 haben aufgrund der durch die Querfaltung hervorgerufene Materialanhäufung eine sehr hohe Festigkeit, die für eine enorme Stabilität des Kunststoffnetzes sorgt.

Die Eigenschaften des Kunststoffnetzes lassen sich durch die Auswahl der Materialstärke, durch die durch Wahl der Parameter des oben beschriebenen Verfahrens beeinflußbare Netzstruktur und insbesondere durch den sogenannten "Memory"-Effekt in vielfältiger Weise beeinflußen. Der "Memory"-Effekt bewirkt, dass sich das Stretchmaterial nach Wickeln des Kunststoffnetzes um den zu verpackenden Gegenstand einschnürt, so dass das Kunststoffnetz fest an dem Gegenstand haftet. Dadurch lassen sich z. B. Stroh- und Heuballen in einfacher Weise an ihrem Außenumfang einwikkeln, wobei sich das Netzmaterial, das über die Ränder hinaus gewickelt wird, so stark einschnürt, dass auch die Stirnseiten der Ballen - und nicht nur deren Außenumfang - mit einer Breite von z. B. 10 cm umwickelt werden, ohne dass die Wickelrichtung geändert werden müsste. Das bedeutet, dass die Ballen an allen Seiten durch das Kunststoffnetz eingehüllt werden, obwohl weder die Ballen noch die Wickelvorrichtung beim Wickeln gedreht werden müssen. Ein derartiger Effekt ist sonst nur von Schrumpfschläuchen her bekannt, die jedoch für die Anwendung bei Heuballen ungeeignet wären.

## Patentansprüche

1. Kunststoffnetz, bestehend aus einer vorgestreckten Kunststoffstreckfolie (2), mit
- einer Vielzahl von in die Kunststoffstreckfolie (2) eingebrachten Löchern (4), die in längs einer Hauptrichtung verlaufenden Spalten und in quer dazu verlaufenden Reihen angeordnet sind;
- zwischen zwei Löchern (4) sich jeweils quer zu der Hauptrichtung (5) erstreckenden, aus der Kunststoffstreckfolie (2) bestehenden Stegen (7); und mit
- zwischen zwei Löchern (4) sich jeweils in der Hauptrichtung (5) erstreckenden, aus der Kunststoffstreckfolie (2) bestehenden Fäden (6);
wobei
- die Stege (7) quer zu der Hauptrichtung vorgestreckt sind;
**dadurch gekennzeichnet, dass** die Fäden (6) aus Teilbereichen der Kunststoffstreckfolie (2) bestehen, die quer zur Hauptrichtung quergefaltet sind.

2. Kunststoffnetz nach Anspruch 1, **dadurch gekennzeichnet, dass** die Löcher (4) durch ein thermisches Verfahren in die Kunststoffstreckfolie (2) eingebracht sind.

3. Kunststoffnetz nach Anspruch 2, **dadurch gekennzeichnet, dass** die Löcher (4) nach ihrer Erzeugung und vor einer Weiterverarbeitung durch einen Wulst mit einer Dicke umgeben sind, die größer als die Dicke der Kunststoffstreckfolie ist, wodurch eine Materialansammlung um jedes Loch herum ausgebildet ist.

4. Kunststoffnetz nach einem der Ansprüche 1 bis 3, **dadurch gekennzeichnet, dass** die Kunststoffstreckfolie (2) aus LLDPE-Polyethylen besteht.

5. Vorrichtung (9) zum Herstellen eines Kunststoffnetzes, zum kontinuierlichen Vorstrecken von in einer Hauptrichtung (5) verlaufenden Teilbereichen einer die Vorrichtung durchlaufenden Kunststoffstreckfolie (2) quer zu der Hauptrichtung (5), mit einer ersten Walze (10) und einer parallel zu der ersten Walze (10) angeordneten zweiten Walze (11), wobei
- die erste Walze (10) wenigstens eine der Anzahl der Teilbereiche entsprechende Anzahl von Stahlscheiben (13) aufweist, die jeweils entsprechend dem Abstand der Teilbereiche beabstandet sind;
- die zweite Walze (11) eine der Anzahl der Stahlscheiben (13) entsprechende Anzahl von ringförmigen Ausnehmungen (16) aufweist, die jeweils entsprechend dem Abstand der Stahlscheiben (13) beabstandet sind;
- die erste Walze (10) und die zweite Walze (11) derart zueinander beabstandet sind, daß jeweils eine Stahlscheibe (13) der ersten Walze (10) in eine Ausnehmung (16) der zweiten Walze (11) eingreift; und wobei
- die Kunststoffstreckfolie (2) zwischen den beiden Walzen (10, 11) derart hindurchführbar ist, dass jeweils ein vorzustreckender Teilbereich tangential zwischen einer Stahlscheibe (13) und einer zugehörigen Ausnehmung (16) hindurchführbar ist;
**dadurch gekennzeichnet, dass**
- an der ersten Walze (10) die Walzenbereiche (12) neben den Stahlscheiben (13) mit einem Material (14) mit hohem Reibungskoeffizient beschichtet sind; und/oder dass
- an der zweiten Walze (11) die Walzenbereiche (15) neben den ringförmigen Ausnehmungen (16) mit einem Material (17) mit hohem Reibungskoeffizient beschichtet sind.

6. Vorrichtung nach Anspruch 5, **dadurch gekennzeichnet, dass** die jeweiligen Walzenbereiche (12, 15) der ersten (10) und der zweiten Walze (11) jeweils mit dem Material (14, 17) beschichtet und derart angeordnet sind, dass sich die mit dem Material (14, 17) beschichteten Walzenbereiche (12, 15) gegenseitig berühren und gegeneinander abwälzen.

7. Vorrichtung (20) zum Herstellen eines Kunststoffnetzes, zum kontinuierlichen Querfalten von sich in einer Hauptrichtung (5) erstreckenden Fäden (6) einer die Vorrichtung durchlaufenden Kunststoffstreckfolie (2), die eine Vielzahl von in Reihen und in entlang der Hauptrichtung (5) verlaufenden Spalten angeordneten Löchern (4) aufweist, mit
- einem ersten (21) und einem zweiten (22), die Kunststoffstreckfolie (2) in der Hauptrichtung (5) spannenden und transportierenden Walzenpaar; und mit
- einem zwischen dem ersten und dem zweiten Walzenpaar (21, 22) angeordneten, gekrümmten Umformbereich (23);
wobei
- das erste und das zweite Walzenpaar (21, 22) sowie der Umformbereich (23) derart zueinander angeordnet sind, dass die Kunststoffstreckfolie (2) gegen den Umformbereich (23) spannbar ist;
- der Umformbereich (23) eine in der Hauptrichtung (5) gekrümmte Führungsplatte (24) aufweist;
- auf der Führungsplatte (24) in einem ersten Abschnitt (25) mehrere sich im Wesentlichen in Hauptrichtung (5) erstreckende Führungsschienen (26) vorgesehen sind;
- auf der Führungsplatte (24) in einem zweiten Abschnitt (29) mehrere sich jeweils an die Führungsschienen (26) anschließende Formrippen (30) vorgesehen sind;
- jede der Formrippen (30) in einem nahe dem ersten Abschnitt (25) gelegenen Anfangsbereich eine Höhe bezüglich der Führungsplatte (24) aufweist, die größer als eine Breite der Formrippe (30) ist, und wobei die Höhe im Verlauf des zweiten Abschnitts (29) in Richtung des zweiten Walzenpaars (22) kontinuierlich abnimmt, während die Breite zunimmt, bis in der Nähe des zweiten Walzenpaars (22) die Höhe der Formrippe (30) kleiner als ihre Breite ist.

8. Vorrichtung nach Anspruch 7, **dadurch gekennzeichnet, dass** der Abstand der Führungsschienen (26) im Verlauf des ersten Abschnitts (25) abnimmt.

9. Vorrichtung nach Anspruch 7 oder 8, **dadurch gekennzeichnet, dass** die Führungsschienen (26) jeweils durch mehrere auf der Führungsplatte (24) befestigte Stützen (28) gebildet sind, die einen Führungskörper (27) tragen.

10. Vorrichtung nach Anspruch 9, **dadurch gekennzeichnet, dass** der Führungskörper (27) aus einem Rohrmaterial herstellbar ist.

11. Vorrichtung nach einem der Ansprüche 7 bis 10, **dadurch gekennzeichnet, dass** die Kunststoffstreckfolie (2) derart über den Umformbereich (23) führbar ist, dass die Fäden (6) über die Führungsplatte (24) gleiten und die Fäden (6) verbindende Stege (7) über die Führungsschienen (26) und die Formrippen (30) gleiten.

12. Verfahren zum Herstellen eines Kunststoffnetzes (2) nach einem der Ansprüche 1 bis 4, mit den Schritten
- Bereitstellen einer Folienbahn aus einer vorgestreckten Kunststoffstreckfolie (2);
- Einbringen von Löchern (4) in die Kunststoffstreckfolie (2) durch lokale Wärmeeinwirkung für jedes Loch (4);
- Vorstrecken der Stege (7);
- Querfalten der Fäden (6).

13. Verfahren nach Anspruch 12, **gekennzeichnet durch** die weiter nachfolgenden Schritte
- Quetschen der quergefalteten Fäden (6) mittels eines Quetschwalzenpaars (22);
- Führen der Kunststoffstreckfolie (2) über eine Heizeinrichtung (31).

14. Verfahren nach einem der Ansprüche 12 oder 13, **dadurch gekennzeichnet, dass** die Kunststoffstreckiblie (2) nach dem Einbringen der Löcher (4) und vor dem Vorstrecken der Stege (7) in der Hauptrichtung verstreckt wird.

## Claims

1. Plastic net consisting of a pre-stretched plastic stretch film (2) provided with
- a multitude of perforations (4) in the plastic stretch film (2) arranged in columns along a main direction and rows transverse to the main direction;
- bridges (7) between two perforations (4), said bridges (7) consisting of the plastic stretch film (2) and extending transverse to the main direction (5);
- filaments (6) between two perforations (4), said filaments (6) consisting of the plastic stretch film (2) and extending in the main direction (5); wherein
- the bridges (7) are pre-stretched in a direction transverse to the main direction;
**characterised in that** the filaments (6) consist of sub-areas of the plastic stretch film (2) that are transversely folded with respect to the main direction.

2. Plastic net according to Claim 1, **characterised in that** the perforations (4) in the plastic stretch film (2) are generated by a thermal procedure.

3. Plastic net according to Claim 2, **characterised in that** the perforations (4), after their generation and before further processing, are surrounded by a build-up with a greater thickness than that of the plastic stretch film, such that material accumulates around each perforation.

4. Plastic net according to anyone of the Claims 1 through 3, **characterised in that** the plastic stretch film (2) consists of LLDPE polyethylene.

5. Device (9) for the manufacture of a plastic net, for continuous pre-stretching of sub-areas of a plastic stretch film (2) travelling through the device, said sub-areas extending in a main direction (5) and being pre-stretched in a direction transverse to the main direction (5), comprising a first roller (10) and a second roller (11) in a parallel arrangement with respect to the first roller (10), wherein
- the first roller (10) comprises at least as many steel discs (13) as there are sub-areas and the distance between steel discs corresponds to the distance of the sub-areas;
- the second roller (11) comprises as many ring-shaped recesses (16) as there are steel discs (13) and the distance between ring-shaped recesses (16) corresponds to the distance of the steel discs (13);
- the first roller (10) and the second roller (11) are arranged at a distance such that each steel disc (13) of the first roller (10) engages a recess (16) of the second roller (11); and wherein
- the plastic stretch film (2) can be guided between the two rollers (10, 11) such that each sub-area to be pre-stretched can be guided tangentially between a steel disc (13) and a corresponding recess (16);
**characterised in that**
- the roller areas (12) of the first roller (10) adjacent to the steel discs (13) are coated with a material (14) with a high frictional coefficient, and/or **in that**
- the roller areas (15) of the second roller (11) adjacent to the ring-shaped recesses (16) are coated with a material (17) with a high frictional coefficient.

6. Device according to Claim 5, **characterised in that** the respective roller areas (12, 15) of the first (10) and the second roller (11) are coated with the material (14, 17) and arranged such that the roller areas (12, 15) coated with the materials (14, 17) contact each other and roll off on each other.

7. Device (20) for the manufacture of a plastic net, for continuous transverse folding of filaments (6), extending in a main direction (5), of a plastic stretch film (2) which travels through the device and comprises a multitude of perforations (4) arranged in rows and in columns along the main direction (5), comprising
- a first (21) and a second pair of rollers (22) which transport the plastic stretch film (2) in the main direction (5) and hold it taut; and
- a curved reshaping area (23) arranged between the first and the second pair of rollers (21, 22);
wherein
- the first and the second pair of rollers (21, 22) and the reshaping area (23) are in a relative spatial arrangement such that the plastic stretch film (2) can be held taut against the reshaping area (23);
- the reshaping area (23) comprises a guide plate (24) which is curved in the main direction (5);
- a first section (25) of the guide plate (24) is provided with several guide tracks (26) extending essentially in the main direction (5);
- a second section (29) of the guide plate (24) is provided with several shaping ledges (30) each being an extension of the guide tracks (26);
- in an initial section near the first section (25), the height of each shaping ledge (30) relative to the guide plate (24) is greater than the width of each shaping ledge (30), and wherein the height continually decreases along the extension of second section (29) in the direction of the second pair of rollers (22), while the width increases, such that in the vicinity of the second pair of rollers (22) the height of the shaping ledge (30) is smaller than its width.

8. Device according to Claim 7, **characterised in that** the distance of the guide tracks (26) decreases along the extension of the first section (25).

9. Device according to Claim 7 or 8, **characterised in that** each guide track (26) is provided by several supports (28) that are attached to the guide plate (24) and bear a guide body (27).

10. Device according to Claim 9, **characterised in that** the guide body (27) can be manufactured from a tube-shaped material.

11. Device according to anyone of the Claims 7 through 10, **characterised in that** the plastic stretch film (2) can be guided over the reshaping area (23) such that the filaments (6) glide over the guide plate (24) and the bridges (7) connecting the filaments (6) glide over the guide tracks (26) and the shaping ledges (30).

12. Procedure for the manufacture of a plastic net (2) according to anyone of the Claims 1 through 4 comprising the steps of
- providing a strip of film of a pre-stretched plastic stretch film (2);
- generating perforations (4) in the plastic stretch film (2) by local heat treatment to produce each perforation (4);
- pre-stretching of the bridges (7),
- transverse folding of the filaments (6).

13. Procedure according to Claim 12, **characterised by** the subsequent steps of
- crimping the transversely folded filaments (6) with a pair of crimping rollers (22);
- guiding the plastic stretch film (2) over a heating facility (31).

14. Procedure according to Claim 12 or 13, **characterised in that** the plastic stretch film (2) is stretched in the main direction after the perforations (4) are generated and before the bridges (7) are pre-stretched.

## Revendications

1. Filet en matière plastique composé d'un film étirable en matière plastique (2) préétiré, avec
- une multiplicité de trous (4) prévus dans le film étirable en matière plastique (2), qui sont disposés en colonnes s'étendant dans un sens principal et en rangées transversales par rapport à celui-ci ;
- des ponts (7) qui s'étendent entre les trous (4), transversalement par rapport au sens principal (5), et qui se composent du film étirable en matière plastique (2) ; et
- des fils (6) qui s'étendent entre les trous (4) dans le sens principal (5) et qui se composent du film étirable en matière plastique (2) ;
- les ponts (7) étant préétirés transversalement par rapport au sens principal,
**caractérisé en ce que** les fils (6) se composent de zones partielles du film étirable en matière plastique (2) qui sont pliées transversalement par rapport au sens principal.

2. Filet en matière plastique selon la revendication 1, **caractérisé en ce que** les trous (4) sont réalisés dans le film étirable en matière plastique (2) à l'aide d'un procédé thermique.

3. Filet en matière plastique selon la revendication 2, **caractérisé en ce que** les trous (4), après avoir été réalisés et avant la suite du traitement, sont entourés par un renflement d'une épaisseur qui est supérieure à celle du film étirable en matière plastique, ce qui forme une accumulation de matière autour de chaque trou.

4. Filet en matière plastique selon l'une des revendications 1 à 3, **caractérisé en ce que** le film étirable en matière plastique (2) se compose de polyéthylène LLDPE.

5. Dispositif (9) pour fabriquer un filet en matière plastique, destiné à préétirer en continu transversalement par rapport à un sens principal (5) des zones partielles, s'étendant dans ce sens principal (5), d'un film étirable en matière plastique (2) qui traverse le dispositif, comprenant un premier rouleau (10) et un second rouleau (11) parallèle à celui-ci, étant précisé
- que le premier rouleau (10) comprend au moins un nombre de plaques métalliques (13), espacées selon l'écartement desdites zones partielles, correspondant au nombre de zones partielles ;
- que le second rouleau (11) comprend un nombre de creux annulaires (16), espacés suivant l'écartement desdites plaques métalliques (13), correspondant au nombre de plaques métalliques (13) ;
- que le premier rouleau (10) et le second rouleau (11) sont espacés de telle sorte que chaque plaque métallique (13) du premier rouleau (10) pénètre dans un creux (16) du second rouleau (11) ;
- et que le film étirable en matière plastique (2) est apte à passer entre les deux rouleaux (10, 11) de telle sorte qu'une zone partielle à préétirer puisse passer tangentiellement entre une plaque métallique (13) et un creux correspondant (16) ;
**caractérisé en ce que**
- sur le premier rouleau (10), les zones de rouleau (12) situées près des plaques métalliques (13) sont revêtues d'une matière (14) à coefficient de frottement élevé ; et/ou **en ce que**
- sur le second rouleau (11), les zones de rouleau (15) situées près des creux annulaires (16) sont revêtues d'une matière (17) à coefficient de frottement élevé.

6. Dispositif selon la revendication 5, **caractérisé en ce que** les zones de rouleau respectives (12, 15) des premier (10) et second (11) rouleaux sont revêtues des matières respectives (14, 17) et sont disposées de telle sorte que lesdites zones de rouleau (12, 15) revêtues de la matière (14, 17) se touchent et roulent l'une sur l'autre.

7. Dispositif (20) pour fabriquer un filet en matière plastique, destiné au pliage transversal en continu de fils (6) s'étendant dans un sens principal (5) d'un film étirable en matière plastique (2) qui traverse le dispositif et qui présente une multiplicité de trous (4) disposés en rangées et en colonnes s'étendant dans le sens principal (5), comprenant
- une première paire de rouleaux (21) et une seconde paire de rouleaux (22) qui tendent et transportent le film étirable en matière plastique (2) dans le sens principal (5) ;
- une zone de déformation courbe (23) disposée entre les première et seconde paires de rouleaux (21, 22) ;
étant précisé
- que les première et seconde paires de rouleaux (21, 22) et la zone de déformation (23) sont disposées les unes par rapport aux autres de telle sorte que le film étirable en matière plastique (2) puisse être tendu contre la zone de déformation (23) ;
- que la zone de déformation (23) présente une plaque de guidage (24) courbée dans le sens principal (5) ;
- qu'il est prévu sur la plaque de guidage (24), dans une première section (25), plusieurs rails de guidage (26) qui s'étendent sensiblement dans le sens principal (5) ;
- qu'il est prévu sur la plaque de guidage (24), dans une seconde section (29), plusieurs nervures de formage (30) qui font suite aux rails de guidage (26) ;
- que chacune des nervures de formage (30) présente dans une zone initiale proche de la première section (25) une hauteur par rapport à la plaque de guidage (24) qui est supérieure à une largeur de la nervure de formage (30), et que cette hauteur va en diminuant de manière continue, suivant la seconde section (29), vers la seconde paire de rouleaux (22), tandis que la largeur augmente, jusqu'à ce que la hauteur de ladite nervure (30) soit inférieure à sa largeur, près de la seconde paire de rouleaux (22).

8. Dispositif selon la revendication 7, **caractérisé en ce que** l'écartement des rails de guidage (26) va en diminuant dans le sens de la première section (25).

9. Dispositif selon la revendication 7 ou 8, **caractérisé en ce que** les rails de guidage (26) sont définis par plusieurs supports (28) qui sont fixés sur la plaque de guidage (24) et qui portent un corps de guidage (27).

10. Dispositif selon la revendication 9, **caractérisé en ce que** le corps de guidage (27) peut être fabriqué à partir d'une matière brute.

11. Dispositif selon l'une des revendications 7 à 10, **caractérisé en ce que** le film étirable en matière plastique (2) est apte à passer sur la zone de déformation (23) de telle sorte que les fils (6) glissent sur la plaque de guidage (24) et que les ponts (7) qui relient les fils (6) glissent sur les rails de guidage (26) et sur les nervures de formage (30).

12. Procédé pour fabriquer un filet en matière plastique (2) selon l'une des revendications 1 à 4, comprenant les étapes consistant à :
- préparer une bande de film à partir d'un film étirable en matière plastique (2) préétiré ;
- faire des trous (4) dans le film étirable en matière plastique (2) grâce à une action thermique locale pour chaque trou (4) ;
- préétirer les ponts (7) ;
- plier transversalement les fils (6).

13. Procédé selon la revendication 12, **caractérisé par** les étapes suivantes :
- pincement des fils (6) pliés transversalement, à l'aide d'une paire de rouleaux presseurs (22) ;
- passage du film étirable en matière plastique (2) par un dispositif chauffant (31).

14. Procédé selon la revendication 12 ou 13, **caractérisé en ce que** le film étirable en matière plastique (2) est étiré dans le sens principal après la réalisation des trous (4) et avant le préétirage des ponts (7).
